# EUROPEAN PATENT APPLICATION

(11) **EP 4 607 378 A1**
(43) Date of publication of application: **27.08.2025**
(21) Application number: 25159186.3
(22) Date of filing: 20.02.2025
(51) Int. Cl.: G06F 21/10, G06F 21/60, H04L 9/08, H04L 9/40, H04W 12/04, H04W 12/10

(54) **INFORMATION PROCESSING DEVICE, QUANTUM CRYPTOGRAPHIC COMMUNICATION SYSTEM, INFORMATION PROCESSING METHOD, AND COMPUTER-READABLE MEDIUM**

(30) Priority: 22.02.2024 JP 2024025252
(71) Applicant: Kabushiki Kaisha Toshiba, Tokyo 105-0023 (JP)
(72) Inventor: YU, Yu, Tokyo (JP); TANIZAWA, Yoshimichi, Tokyo (JP)
(74) Representative: Marks & Clerk LLP

(57) **Abstract**

According to an arrangement, an information processing device (17) includes a processing unit (173). The processing unit (173) is configured to: acquire, from one or more key management devices (10) that share, by an encryption relay using a first encryption key, second encryption keys with another key management device (10), an accumulated amount of the second encryption keys for each sharing destination; notify a control device (6) of a specific rule for specifying a flow to be encrypted by the second encryption keys; acquire flow information on a flow to be encrypted from the control device (6); determine whether the accumulated amount of the second encryption keys to be used by first and second communication devices (14a, 8) is equal to or larger than the amount of communication data; and instruct, among the one or more key management devices (10), a key management device (10) connected to the first communication device (14a) to provide the second encryption keys to the first communication device (14a) when the accumulated amount of the second encryption keys is equal to or larger than the amount of communication data.

## Description

### FIELD

The present disclosure relates to an information processing device, a quantum cryptographic communication system, an information processing method, and a computer-readable medium.

### BACKGROUND

In a cloud-based network such as a 5G network, security for communication from the 5G network to the cloud is an important issue. For example, the inside of the 5G network is protected by post-quantum cryptography (PQC), which is a public encryption method, but an encryption method from the 5G network to the cloud has not been determined. In addition, the key generation speed of QKD and the throughput of data communication in the 5G network are different orders of magnitude. Therefore, there is a possibility that all data cannot be encrypted by a specific method. That is, it is expected that quantum cryptography that is not broken even by a quantum computer will be applied to a specific communication flow among a vast amount of data between the 5G core network and the cloud. Therefore, there is a need for a quantum encryption function of a specific flow in a 5G core network for cloud.

However, in the conventional technology, it has been difficult to more safely and efficiently perform encrypted communication utilizing a QKD network for a specific flow.

### BRIEF DESCRIPTION OF THE DRAWINGS

Fig. 1 is a diagram illustrating an example of a configuration of a quantum cryptographic communication system according to an arrangement;
Fig. 2 is a diagram illustrating an implementation example of a specific flow encryption function according to the arrangement;
Fig. 3 is a diagram illustrating an example of a selecting function of a 5G core network according to the arrangement;
Fig. 4 is a diagram illustrating an example of a 5G U-Plane protocol stack according to the arrangement;
Fig. 5 is a diagram illustrating an example of a device configuration for realizing the specific flow encryption function according to the arrangement;
Fig. 6 is a diagram illustrating an example of a functional configuration of a QCF according to the arrangement;
Fig. 7 is a sequence diagram illustrating an example of an information processing method according to the arrangement;
Fig. 8 is a diagram illustrating an example of a method of overall encryption of data packets in a specific flow according to the arrangement;
Fig. 9 is a diagram illustrating an example of a method of encrypting a payload portion of a specific flow;
Fig. 10 is a diagram for explaining a specific flow encryption function according to a first modification of the arrangement;
Fig. 11 is a diagram for explaining a specific flow encryption function according to a second modification of the arrangement;
Fig. 12 is a diagram illustrating an example of a hardware configuration of a QKD module according to the arrangement; and
Fig. 13 is a diagram illustrating an example of a hardware configuration of each of a key management device and a QCF according to the arrangement.

### DETAILED DESCRIPTION

In general, according to one arrangement, an information processing device includes a processing unit configured to: acquire, from one or more key management devices that share, by an encryption relay using a first encryption key, second encryption keys with another key management device, an accumulated amount of the second encryption keys for each sharing destination, the first encryption key being shared between opposing QKD modules included in a quantum key distribution network (QKDN); notify a control device of a specific rule for specifying a flow to be encrypted by the second encryption keys, the control device controlling communication of a user network; acquire flow information from the control device, the flow information including an amount of communication data between first and second communication devices that communicate for the flow to be encrypted; determine whether the accumulated amount of the second encryption keys to be used by the first and second communication devices is equal to or larger than the amount of communication data; and instruct, among the one or more key management devices, a key management device connected to the first communication device to provide the second encryption keys to the first communication device when the accumulated amount of the second encryption keys is equal to or larger than the amount of communication data.

Exemplary arrangements of an information processing device, a quantum cryptographic communication system, an information processing method, and a computer-readable medium will be explained below in detail with reference to the accompanying drawings. The present invention is not limited to the following arrangements.

First, the quantum cryptographic communication system handled in the arrangement will be described.

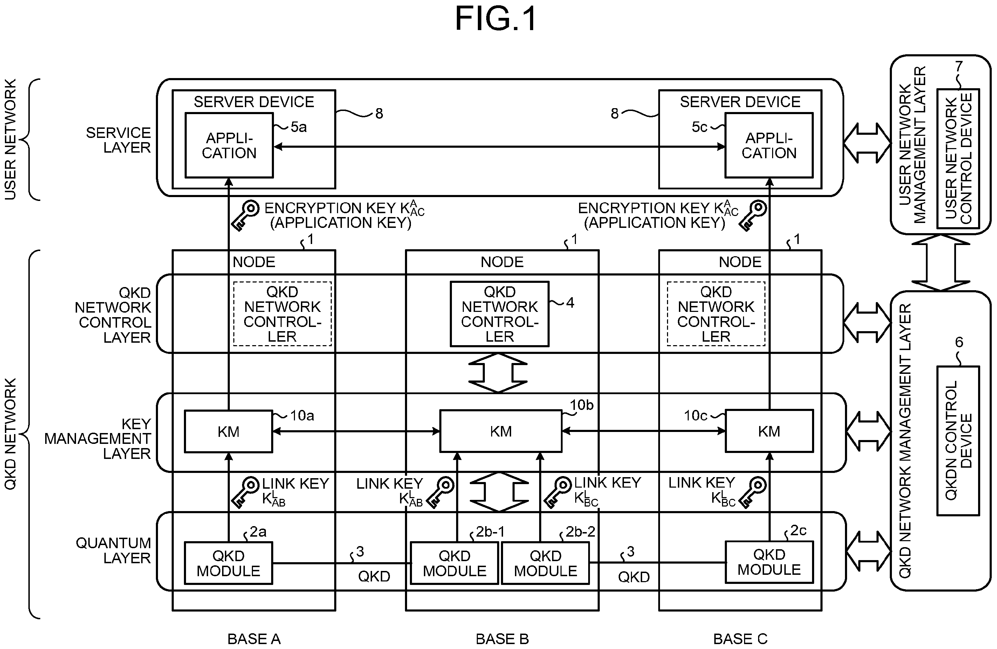

Fig. 1 is a diagram illustrating an example of a configuration of the quantum cryptographic communication system according to the arrangement. When viewed laterally, a QKD network architecture includes a quantum layer, a key management layer, a QKD network control layer, and a QKD network management layer for managing these three layers from the bottom. These four layers generate an application key used by an application 5 for encryption and decryption for data communication (hereinafter, referred to as "application key") and supplies the application key to a service layer in the uppermost user network. When viewed vertically, three nodes 1 (QKD nodes/trusted nodes) including the QKD network (hereinafter referred to as "QKDN") and the user network are installed in base A, base B, and base C, respectively.

The quantum layer includes QKD modules 2 and QKD links 3. A main function of the quantum layer is to exchange photons and classical information (control information transmitted and received by a normal control link different from the QKD links) between the QKD modules 2 at different bases to share a link key (random number sequence). Further, the quantum layer has a function of supplying a random number sequence to key management devices (KMs) 10 (10a to 10c). The link key (quantum encryption key) shared by the QKD link 3 is guaranteed not to have been eavesdropped based on the principle of quantum mechanics. When cryptography data communication is performed using a cryptographic communication method called a one-time pad by using the shared link key, it is guaranteed by information theory that transmitted and received data cannot be decrypted by an eavesdropper having any knowledge. The QKD modules 2 (2a, 2b-1, 2b-2, and 2c) are connected to each other by the QKD links 3 such as optical fibers.

However, the method of sharing the link key in the QKD technology has a restriction on a distance at which the link key can be shared because a single photon is used as a medium. For example, as illustrated in the example of the quantum layer in Fig. 1, the QKD module 2 basically has a one-to-one correspondence, but in the case of relaying, at least two QKD modules 2b-1 and 2b-2 are required in the relaying base B. In the example of Fig. 1, it is illustrated that application key K^{A}_{AC} is supplied to the base A and the base C. In the base B, the QKD module 2b-1 decrypts an application key encrypted in the base A using the same link key K^{L}_{AB} as in the base A (that is, a common key in which an encryption key and a decryption key are the same). Then, the QKD module 2b-2 encrypts the decrypted application key again using link key K^{L}_{BC} and relays the encrypted application key K^{A}_{AC} to the base C.

In order to guarantee unconditional security, QKD has to sacrifice communication performance such as distance and speed to some extent. In general, a link key generation rate is about 200,000 to 300,000 bits per second (200 to 300 kbps) within a range of 50 km of a laid fiber. When the QKD key distillation process is hardware-optimized, the QKD key generation speed reaches a maximum of 10 Mbps at a short distance.

In order to maintain the key generation speed at Mbps, it is necessary to install relay nodes at distances capable of maintaining Mbps and perform a key relay between relaying bases. On the other hand, in the relaying bases, it takes a processing time for encryption/decryption.

The key management layer includes key management devices (KMs) 10a to 10c and KM links. Main functions of the key management layer include supply of an application key to the applications 5a and 5c that actually encrypt data, key relay to another base via a KM link, and the like. The key management devices (KMs) 10a to 10c are responsible for overall key management such as reception of key requests from the applications 5a and 5c and storage of interfaces in association with the main function of the key management layer.

The QKD network control layer includes QKD network controllers 4 and links. The QKD network control layer controls overall services of the QKD network. The QKD network controller may be provided in each base, or one QKD network controller (or a plurality of QKD network controllers) may be provided in the entire quantum cryptographic communication system as illustrated in Fig. 1. Further, the QKD network controller 4 and the KM 10 may be integrally realized.

The QKD network management layer includes a QKDN control device 6. The QKD network management layer has functions of collecting performance information from each layer, monitoring whether the service is operating properly, and issuing a control command to the QKD network control layer as needed. A plurality of QKDN control devices 6 may be provided depending on the configuration of the QKD network. The function of the QKDN control device 6 may be realized/implemented by the KM 10.

The service layer has a different configuration depending on the user, but includes applications 5a and 5c for realizing encrypted communication, a computer module, and the like. In addition, the service layer has a function of encrypting an application key with a link key and transferring the encrypted application key to an adjacent node. Note that application 5 in the service layer may separately generate an encryption key (application key) different from the link key from random number information or the like regardless of QKD.

In the service layer, the application key is mainly used for encryption by a common encryption method. The common encryption method is a so-called encryption method in which communication data and messages are encrypted and decrypted using the same application key shared in advance between the transmission side and the reception side. Specifically, the application key is used in advanced encryption standard (AES) encryption, one time pad (OTP) encryption, and the like.

The user network management layer includes a user network control device 7. The user network management layer collects performance information from the service layer, and monitors whether the service is operating properly.

Note that the architecture illustrated in Fig. 1 indicates basic elements. Actually, the configuration of the architecture may vary depending on the situation. For example, the number of bases is not limited to three. In addition, for example, the number of applications 5 is not limited to two. In addition, for example, the number of QKDN control devices 6 in the QKD network management layer is not limited to one.

The above-described user network is a public network, and is a network in which cryptographic communication is performed by the application 5. The application 5 operates, for example, in a server device 8. The user network is, for example, a data communication network such as the Internet or a cellular communication network. In the present arrangement, the user network is a 5G network, which is a representative example of a mobile phone network/mobile communication network. 5G is a fifth generation mobile communication system.

On the other hand, the above-described QKD network (quantum cryptographic communication network) is a private network, and a node (QKD node/node) is installed according to an actual need. The node provides an encryption key for cryptographic communication to the user network.

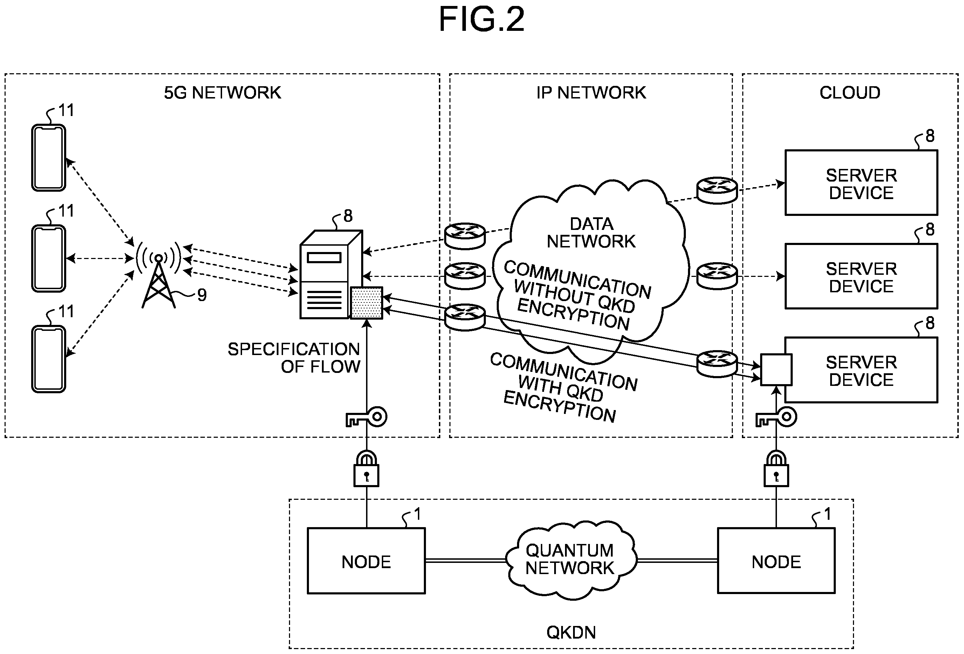

Fig. 2 is a diagram illustrating an implementation example of the specific flow encryption function according to the arrangement. The network configuration of Fig. 2 mainly includes four parts: a 5G network, an IP network, a cloud, and a QKDN. The 5G network, the IP network, and the cloud correspond to the user network in Fig. 1.

The 5G network includes a server device 8 basically constituting a core network, a gNB (5G gNodeB) 9, and user equipment (UE) 11.

The server device 8 constituting the 5G core network is a core part of a network owned by a communication carrier. The server device 8 plays various roles related to calls, communication, and the like, such as terminal authentication, terminal location management, policy control, packet transfer control, establishment of communication paths, and data exchange with a data network (DN).

The gNB 9, which is a base station in a radio access network (RAN), has functions as a radio unit (RU), a distributed unit (DU), and a central unit (CU). The RU processes radio frequency (RF). The DU and the CU process frequencies other than the radio frequency (RF). The DU performs real-time control and the like. The CU implements a non-real-time function and the like. The gNB 9 is physically equipment such as an antenna, a radio device, and a transfer device.

The UE 11 is a mobile phone, a smartphone, a tablet, a SIM card, or the like.

The right side of the server device 8 constituting the 5G core network is a DN, and is also referred to as a backbone. A representative example of the DN is the Internet. The communication speed of the backbone is basically 10 Gbps or more. The IP network is a network between computers interconnected using the Internet protocol suite technology. The IP network is also called an IP communication network used on the Internet.

The cloud is a system that provides a service to a user via a network such as the Internet. The user uses the service provided by a computer (server device 8) connected to the network such as the Internet on his/her personal computer, smartphone, tablet, or the like via the network.

The QKDN, which is a network including nodes 1, generates an encryption key that is uneavesdroppable between the nodes 1, and provides the encryption key for cryptographic communication to the user network (the 5G network, the IP network, and the cloud in the example of Fig. 2).

In the present arrangement, a specific flow in communication from the server device 8 of the 5G network to the cloud via the IP network is selected, and end-to-end (E2E) secure communication is performed using the encryption key provided from the QKDN. For example, secure communication is performed in a flow for a designated application service from a server device 8 that is a designated start point to a server device 8 (cloud server) that is a designated destination.

For example, among communications from the UE 11 to the server device 8 of the cloud, E2E secure communication from the core network to the cloud is guaranteed for communication data for a file transfer service (file transfer protocol (FTP)). Specifically, the communication data for the file transfer service is encrypted by using an encryption key provided from the QKDN to the 5G core network, and is decrypted by using a decryption key (a key common to the encryption key) provided from the QKDN to the cloud.

For example, secure communication is performed with no encryption or by an encryption method that is not quantum cryptography for services (e.g., acquisition of web information (hyper text transfer protocol (HTTP))) other than file transfer service.

Note that Fig. 2 illustrates an example in which the specific flow encryption function is realized. Actually, the configuration may vary depending on the situation. For example, the number of UEs 11, the number of server devices 8, the number of nodes 1, and the like are not limited to the example of Fig. 2. Furthermore, for example, the destination of the encryption key (decryption key) from the node 1 is not limited to the example of Fig. 2.

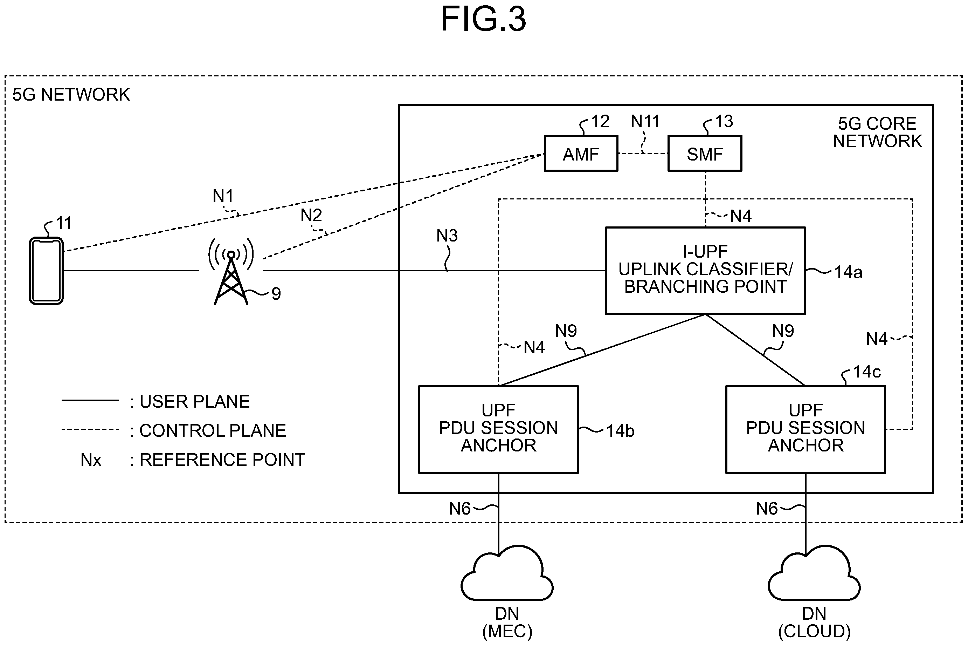

Fig. 3 is a diagram illustrating an example of a selecting function of the 5G core network according to the arrangement. The 5G network includes a UE 11 used by an end user, the gNB 9 (base station) that wirelessly communicates with the UE 11, and a 5G core network in which a function for realizing mobile communication is realized.

Three main components/network functions (NFs) are illustrated in the 5G core network of Fig. 3. An access and mobility management function (AMF) 12 is responsible for access to the 5G core network and a mobility management function. A session management function (SMF) 13 is responsible for a session management function.

An I-UPF uplink classifier/branching point 14a and the UPF PDU session anchors 14b and 14c are responsible for user plane functions (UPFs).

Hereinafter, the I-UPF uplink classifier/branching point 14a and the UPF PDU session anchors (UPF PSAs) 14b and 14c are simply referred to as UPFs 14a, 14b and 14c. In addition, when the UPFs 14a, 14b, and 14c are collectively referred to, they are simply referred to as UPF 14.

In the 5G network, a user plane (U-Plane) function is separated from a control plane (C-Plane) function. The U-plane is a function for realizing user communication, and the C-plane is a function for controlling communication. In Fig. 3, the U-Plane is indicated by a solid line, and the C-Plane is indicated by a broken line. "Number" above the U-Plane line or the C-Plane line is a reference point.

The reference point Nx indicates an interaction existing between NF services of network functions described by a point-to-point reference point (N11 between the AMF and the SMF) between any two components (e.g., the AMF and the SMF).

Below the 5G core network is a DN, which indicates an external network. In Fig. 3, two types of DNs are illustrated to describe the selecting function. One is mobile edge computing (MEC), which is a local DN that realizes low latency, and the other is the cloud, which is a central DN that provides third-party services. The MEC is a mechanism for creating a DN near a terminal or a base station, rather than a central mobile core, to provide a low-latency and broad-band computing environment.

The two DNs are connected to the UPF 14b or 14c of the 5G core network. The forwarding of communication to either DN is realized by the uplink classifier/branching point function of the UPF. The uplink classifier/branching point function is specified as a technology for branching a protocol data unit (PDU) session based on a destination IP address or the like.

A basic flow of the selecting function will be described with reference to Fig. 3 as an example. In order to track the UE 11 even when it moves, first, the UE 11 (terminal) is registered in the AMF 12 via the gNB 9 (exchanged by N1 and N2). Next, the AMF 12 requests the SMF 13 to establish a PDU session (exchanged by N11).

The SMF 13 performs authentication and authorization. The SMF 13 determines parameters such as an IP address assigned to the UE 11, and notifies the gNB 9 and the UE 11 of the parameters via the AMF 12. At the same time, the SMF 13 selects the UPF 14a and requests set-up (exchanged by N4).

The UPF 14a sets up a PDU session based on the parameters received from the SMF 13. The UPFs 14b and 14c are established by connection with the DNs. In Fig. 3, the UPF 14b connected to the MEC and the UPF 14c connected to the cloud are established. A communication packet from the UE 11 to the destination is transferred to the selected UPF 14b or 14c (UPF PSA) via the designated UPF 14a (I-UPF) based on the set-up of the PDU session. The selected UPF 14b or 14c transfers the received communication packet to the designated DN (MEC or cloud).

In addition, when the UE 11 (terminal) moves (handover), it is necessary to replace the PDU session. The handover is that the gNB 9 (base station) to which the UE 11 is connected is changed when the UE 11 moves. Since the IP address of the UE 11 does not change even after the handover, the connectivity at the transmission control protocol (TCP)/Internet protocol (IP) level is maintained. If the UPF 14a is not changed, the UPF 14b or 14c (UPF PSA) connected to the DN is also not changed.

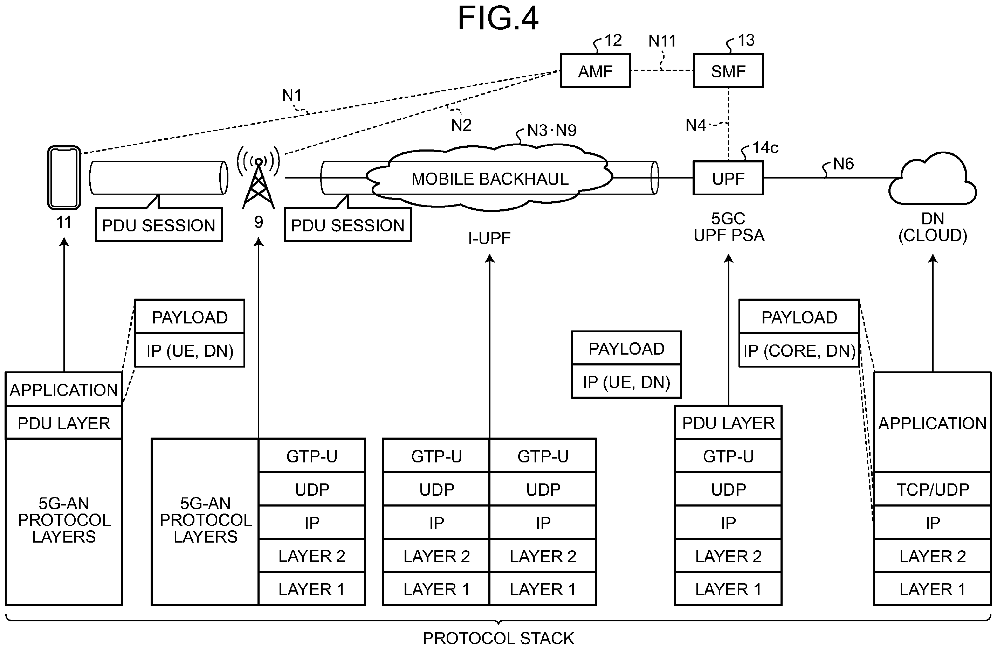

Fig. 4 is a diagram illustrating an example of a 5G U-Plane protocol stack according to the arrangement. Communication from the UE 11 to the designated DN is forwarded to the designated UPF 14 (UPF PSA) via the designated I-UPF according to a specific parameter from the SMF 13 of the core network. That is, a dedicated PDU session is established, and communication data from the UE 11 to the core network is transmitted in the PDU session. Since the space from the UE 11 to the gNB 9 is complicated by another method, this part is not handled.

The PDU session from the gNB 9 to the core network (exchanged by N3) is implemented using a GPRS tunneling protocol for user plane (GTP-U) protocol. The GTP-U is a user datagram protocol (UDP)-based protocol. The GTP-U encapsulates a packet from the UE and creates a point-to-point overlay network between the gNB 9 and the UPF 14c.

As illustrated in the PDU layer portion of Fig. 4, data (payload portion and IP header) from the UE 11 is encapsulated up to the UPF 14c (UPF PSA) in the PDU session and transmitted to the core network. Communication from the core network to the DN is possible in both a case where the IP header of the UE 11 (the IP address of the UE 11) is used as it is and a case where the IP header of the UE 11 is changed to the IP header of the core network (the IP address dedicated to the outside of the core network).

Note that the technology illustrated in Figs. 3 and 4 makes it possible to select only a specific flow from a terminal at a designated start point to a designated destination. Then, for the specific flow, secure communication can be performed from the core network to the designated destination by using a quantum encryption key.

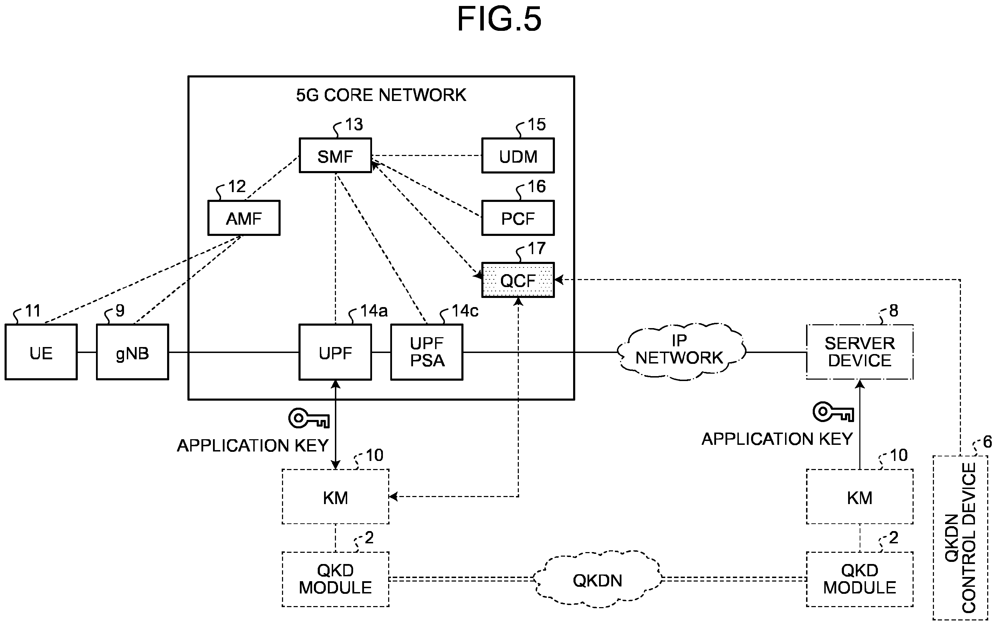

Fig. 5 is a diagram illustrating an example of a device configuration for realizing the specific flow encryption function according to the arrangement. Fig. 5 is mainly divided into three parts. The first part is a mobile phone network of a 5G network. The 5G network includes a UE 11, a gNB 9, and a 5G core network. The second part is a DN, including an IP network and a server device 8 (cloud server). The third part is a network that provides an application key to the 5G core network and the server device 8 (user network), and includes a QKD module 2, a KM 10, a QKDN control device 6, and a QKD network.

Functions of a QCF 17 (an example of an information processing device) according to the arrangement will be described in detail using the configuration example of Fig. 5. For example, secure communication is performed from a specific UE 11 in the user network to a designated server device 8 (cloud server) via the IP network. On land, the QKDN is basically an optical fiber-based technology, and wireless communication between the UE 11 and the gNB 9 makes it difficult to provide an E2E application key from the QKDN. Therefore, it is assumed that secure communication from the UE 11 to the core network is realized by the PQC technology. That is, in the arrangement, a specific flow from the 5G core network to a server device 8 of a designated destination is encrypted and communicated by an application key shared using QKD.

In the present arrangement, as an NF in the 5G core network, a quantum cryptograph function (QCF) is newly installed in addition to the AMF 12, the SMF 13, the UPF 14a, the UPF PSA 14c, a unified data management (UDM) 15, and a policy control function (PCF) 16.

The AMF 12 is responsible for functions of managing registration, connection, and movement of the UE 11 (terminal).

The SMF 13 is responsible for a function of managing "sessions". For example, the SMF 13 assigns an IP address to the UE 11, selects a UPF 14 to be connected to the UE 11, and sets a function to be executed by the UPF 14.

The UPF 14 is an anchor point of communication between the UE 11 of the mobile network and the server device 8 of the DN. The so-called UPF 14 is a gateway for connecting a mobile network to the DN such as the Internet. The UPF 14 is responsible for overall functions related to user communication, such as buffering when the UE 11 is in an idle state, measuring a communication volume, and limiting a communication speed.

The UDM 15 manages information such as access authentication, user registration, and data networks.

The PCF 16 is responsible for a policy control function. For example, the PCF 16 sets quality such as a speed and a delay time of a data transfer path to be used based on requirements from each application.

The QCF 17 has an external (QKDN) function, an internal (5G network) function, and a cooperation function.

### External Function

Examples of external functions include information collection, information exchange, and application key request in cooperation with the QKDN. In the information collection in cooperation with the QKDN, for example, information on the application key providing destination is acquired from the KM 10 or the QKDN control device 6 in the QKDN with which the QCF 17 is in cooperation. The information on the application key providing destination includes the IP address of the server device 8 of the 5G core network, the IP address of the server device 8 (cloud server) connected to the IP network, and the like.

In addition, for example, in the information collection in cooperation with the QKDN, application key-related information is acquired. The application key-related information includes the accumulated amount of application keys that can be provided from the KM 10 between the 5G core network and the server device 8 (cloud server) of the specified destination.

In the information exchange in cooperation with the QKDN, for example, the QCF 17 acquires the amount of data in secure communication, and compares the amount of data with the number of accumulated application keys that can be provided from the KM 10. Then, the QCF 17 selects an optimum encryption method in accordance with a request for communication (e.g., a limitation of processing time due to low-delay communication or the like). Thereafter, the QCF 17 notifies the KM 10 of an application key amount, a provision destination, and the like, and requests an application key. Examples of the encryption method include OTP and AES. The OTP is a cryptographic operation technique in which a random number sequence is used only once at most. The AES is a common key cryptographic algorithm defined as standard cryptography by the United States in 2001. The AES is a block cipher having a substitution permutation network (SPN) structure.

### Internal Function

Examples of internal functions include determination of a specific element and a selection rule for a flow, and information exchange between NFs for realizing selection of the flow. The specific element for the flow includes, for example, designation of a start point, designation of a destination, designation of an application type, or a combination of these designations.

The selection rule for the flow based on the specific element includes, for example, a location of the UE 11, a name (data network name (DNN)) of the destination, a slicing type, 3 Tuples and 5 Tuples, or a combination thereof. The DNN is dedicated information inside the 5G network. Translation of the IP address and the DNN of the destination is one function of the UDM 15. 3 Tuples refers to an IP address and protocol of a start point/destination in an IP header in a case where an IP protocol is used. Further, 5 Tuples refers to a port number of a transmission source (start point) and a port number of a destination (end point) in a TCP/UDP header in a case where a TCP/UDP protocol is used.

The specific element or the selection rule can be designated from the UE 11, an administrator terminal of the 5G core network, or the like. As a method of designating the selection rule from the UE 11, for example, the selection rule may be input/edited via a dedicated application/home page. In addition, as a method of designating the selection rule from the administrator terminal of the 5G core network, the selection rule may be directly input and edited from the NF dedicated to the administrator. Note that the selection rule for the flow is stored in the QCF 17, but may be stored in the PCF 16 and the UDM 15.

### Cooperation Function

Examples of cooperation functions include storage of specific flow-related information (e.g., the amount of data in secure communication using an encryption key), application key provision information (e.g., the amount of provision of application keys), and the like, sharing of information with another NF (e.g., a charging management device that operates as an NF having a charging function), management of other encryption keys, and the like.

The cooperation function, for example, shares information with another NF having a billing function. The QCF 17 collects related information such as the amount of data in secure communication using the application key in the UPF 14 via the SMF 13. The QCF 17 stores the collected related information, and notifies the NF having the charging function of the related information at a predetermined cycle. Specifically, the QCF 17 notifies the charging management device (the NF having the charging function) of the total amount of communication data encrypted and communicated by application keys via a communication IF. The NF having the billing function calculates a fee based on the total amount of communication data encrypted and communicated by application keys (the amount of usage of secure communication data).

In addition, for example, the QCF 17 stores the related information such as the amount of provision of application keys collected from the KM 10, and notifies the NF having the charging function of the related information at a predetermined cycle. The NF having the charging function calculates a fee based on the amount of provision of application keys.

Furthermore, for example, the QCF 17 may also manage an encryption key (a PQC encryption key or the like) other than the application key provided from the QKDN, generate a hybrid key by combination with the application key, and further provide various types of secure communication.

In order to control the encryption of the specific flow, functions are added to the SMF 13 and the UPF 14 in addition to the installation of the QCF 17 in the arrangement.

A function of acquiring a specific rule for a flow encrypted by an application key is added to the SMF 13. For example, the specific rule for the flow includes a combination of designation of a cloud (specific DNN), designation of a communication type (e.g., communication data of TCP (protocol number 6)), and designation of an application (e.g., FTP, a file transfer application using port number 20).

The SMF 13 performs communication control by exchanging information with the UDM 15 and the PCF 16. For example, the SMF 13 translates the DNN into the IP address of the destination cloud. In addition, for example, the SMF 13 controls communication-related policies in the 5G core network.

The SMF 13 selects an appropriate UPF 14a according to the specific rule, and establishes a UPF 14c (UPF PSA). A function in which the SMF 13 shares related information with the QCF 17 is also added. For example, the related information includes the IP address of the UE 11, information on the selected UPF 14a, information on the UPF 14c (UPF PSA), communication data for the specific flow, and the like.

The SMF 13 also determines routing from the UE 11 to the UPF 14c (UPF PSA) and the like, and establishes a dedicated PDU session.

Before requesting an application key, the selected UPF 14a acquires information related to the KM 10 from the QCF 17 via the SMF 13, and performs authentication and authorization with the KM 10. The UPF 14a receives the data of the dedicated PDU session and inspects the packet. At that time, the UPF 14a requests an application key based on the data size to the KM 10 via the QCF 17. The UPF 14a receives an application key from the KM 10 and encrypts the data for the specific flow. Thereafter, the UPF 14a transfers the encrypted data packet for the specific flow to the DN via the established UPF 14c (UPF PSA).

Although the configuration of the 5G core network and the functions of the QCF 17 in the present arrangement have been described with reference to Fig. 5, the above-described configuration is an example, and the configuration of the 5G core network and the functions of the QCF 17 are not limited to the example of Fig. 5.

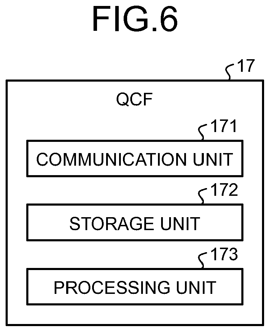

Fig. 6 is a diagram illustrating an example of a functional configuration of the QCF 17 according to the arrangement. The QCF 17 according to the arrangement includes a communication unit 171, a storage unit 172, and a processing unit 173.

The communication unit 171 transmits and receives communication data to and from another device. The communication unit 171 is realized by a wireless IF or a wired IF.

The storage unit 172 stores information such as the accumulated amount of application keys collected from one or more KMs 10 for each sharing destination and the total amount of communication data encrypted and communicated by the application keys. The storage unit 172 is realized by, for example, a combination of main storage devices, such as a read only memory (ROM) and a random access memory (RAM), and auxiliary storage device, such as a hard disk drive (HDD) and a memory card.

The processing unit 173 performs various kinds of processing for implementing the functions of the QCF 17. The processing unit 173 is realized by at least one processing device. This processing device includes, for example, a control device and an arithmetic device, and is realized by an analog or digital circuit or the like. The processing device may be a central processing unit (CPU), or may be a general-purpose processor, a microprocessor, a digital signal processor (DSP), an application specific integrated circuit (ASIC), a field-programmable gate array (FPGA), or a combination thereof.

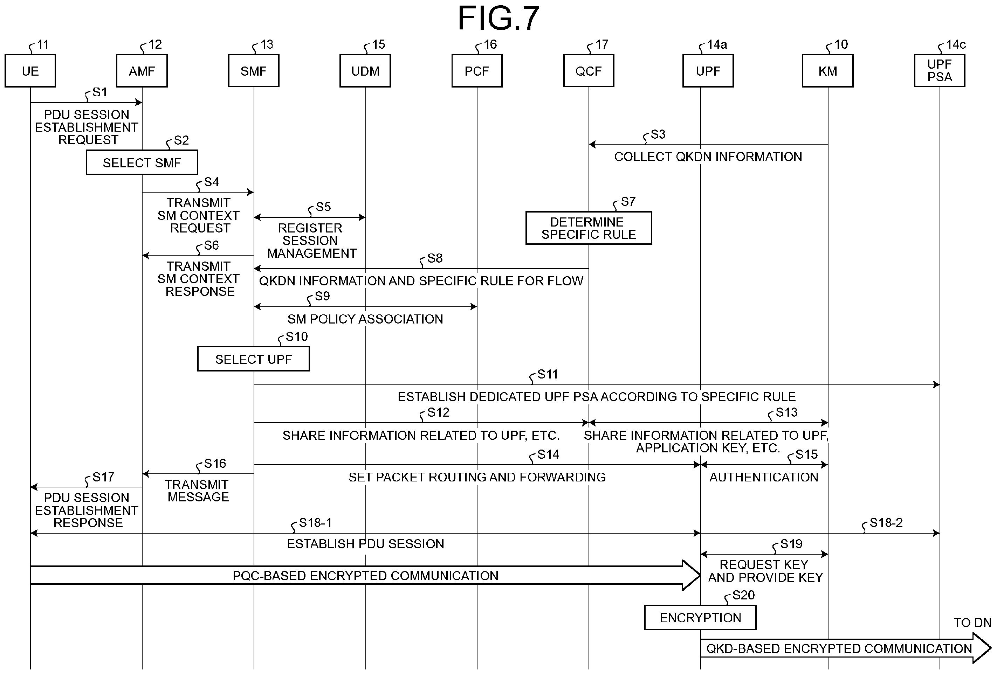

Fig. 7 is a sequence diagram illustrating an example of an information processing method according to the arrangement. In Fig. 7, other than the UE 11 and the KM 10 are NFs of the 5G core network. In addition to the QCF 17, the SMF 13, the UPF 14, the KM 10, etc. perform additional operations in order to select a specific flow and implement an encryption function with an application key using the QKDN.

By registering the UE 11 on the network, the user is enabled to receive services, the UE 11 is enabled to communicate, and the UE 11 can be tracked when it moves. The detail of the processing of registering the UE 11 on the network are omitted because it is not within the scope of the arrangement. Note that the method of registering the UE 11 is defined in ITU-T TS 23.502. Similarly, the method of deregistering the UE 11 is also outside the scope of the arrangement.

The following description is mainly based on a PDU session establishing phase.

First, the UE 11 transmits a message to the AMF 12 for a PDU session establishment request (step S1). The message includes a DNN, a request type, an old PDU session ID (a PDU session ID used in one-previous communication), slice-related information, PDU session establishment request information, and the like. In addition, the message also includes location information, access type information, and the like obtained by the gNB 9 (base station).

Next, the AMF 12 selects an SMF 13 based on the request type (step S2).

On the other hand, the QCF 17 collects QKDN information from the KM 10 or the QKDN control device 6 in the QKDN with which the QCF 17 is in cooperation (step S3). For example, the QKDN information includes information on an application key providing destination, information on accumulation of application keys, and the like. Note that the processing in step S3 is periodically performed.

Next, the AMF 12 transmits an SM context request to the SMF 13 (step S4). There are two types of SM context requests: "create request" and "update request". The "create request" and the "update request" contain different information.

Next, if the request type of the SM context request transmitted in step S4 is not "emergency request" or "existing emergency PDU session", and a PDU session ID has not yet been registered by the SMF 13, the SMF 13 requests the UDM 15 to register session management (step S5).

Next, the SMF 13 transmits an SM context response (a response to the create request or a response to the update request) to the AMF 12 in response to the SM request received in step S4 (step S6). There are two types of responses to the create request: "SM context ID" and "PDU session rejection". In the case of the former, if the SMF 13 receives the request and is able to process the PDU session establishment request, the SMF 13 creates an SM context and determines an SM context identifier (e.g., SM context ID).

Note that the create request may be rejected based on a local configuration or the like according to the setting of integrity protection in the U-Plane security policy of the PDU session. If the create request is rejected, the PDU session establishment processing is stopped.

On the other hand, the QCF 17 determines a specific rule for specifying a flow to be encrypted according to the specific element (step S7). For example, the QCF 17 receives a specific rule from the UE 11 in the 5G network (an example of a user terminal in the user network) or the administrator terminal via the communication IF. Step S7 can be performed after the UE 11 is registered. Note that step S7 may be executed at any timing from step S1 to step S6. In addition, the administrator in the 5G core network may input a specific rule to the QCF 17 in advance.

Next, the QCF 17 transmits the QKDN information collected in step S3 and the specific rule for the flow to the SMF 13 (step S8).

Then, the SMF 13 selects a PCF 16, and establishes or modifies an SM policy association (step S9).

Next, the SMF 13 selects a UPF 14a (step S10). Specifically, if the request type of the SM context request transmitted in step S4 is an initial request, the SMF 13 starts N4 session establishment processing by using the selected UPF 14a. If the request type of the SM context request transmitted in step S4 is not an initial request, the SMF 13 starts N4 session modification processing by using the selected UPF 14a.

Next, the UPF 14a establishes a dedicated UPF PSA 14c connected to the designated DN according to the specific rule for the flow from the SMF 13 (step S11).

Next, the SMF 13 notifies the QCF 17 of information related to the UPFs 14a and 14c, and shares the related information with the QCF 17 (step S12). For example, the information related to the UPFs 14a and 14c includes the IP addresses of the UPFs 14a and 14c, the size of the communication data, etc.

Next, the QCF 17 shares information related to the UPFs 14a and 14c and application keys, etc. with the KM 10 (step S13). Specifically, first, the QCF 17 notifies the KM 10 of the information related to the UPFs 14a and 14c, and feeds back the related information to the QKDN. For example, the QCF 17 feeds back the related information to the KM 10 that is directly connected to the 5G core network. Further, for example, the QCF 17 feeds back the related information to the QKDN control device 6, and feeds back the related information to the KM 10 that can provide an application key to the 5G core network via the QKDN control device. For example, the information related to the UPFs 14a and 14c includes the IP address of the UPF PSA 14c, the amount of application keys according to the size of the communication data, etc.

Next, the QCF 17 secures a communication path from the KM 10 to the UPF 14a. For example, the processing of securing a communication path includes processing of determining a routing path between the UPF 14a and the KM 10 and notifying the KM 10 connected to the UPF 14a of the routing path via the communication IF.

Next, the KM 10 compares the size of the communication data included in the fed-back related information with the accumulated amount of application keys between KMs 10 connected to the destination. Note that this comparison processing may be performed by the QCF 17 based on the QKDN information collected in step S3, or the QCF 17 may request the KM 10 to execute the comparison processing.

When the accumulated amount of application keys is equal to or larger than the size of the communication data, the KM 10 notifies the QCF 17 that the application keys can be provided. When the accumulated amount of application keys is smaller than the size of the communication data, the KM 10 notifies the QCF 17 of the current accumulated amount and the time at which the application keys can be provided, and starts sharing the application keys with the destination KM 10.

Upon receiving a notification from the KM 10, the QCF 17 selects an appropriate encryption method. For example, the QCF 17 selects a first encryption method or a second encryption method according to the accumulated amount of application keys. The first encryption method is an encryption method in which the amount of application keys used for encryption is larger than that in the second encryption method. The second encryption method is an encryption method in which the amount of application keys used for encryption is smaller than that in the first encryption method. Specifically, when the accumulated amount of application keys is equal to or larger than the size of the communication data, the KM 10 selects an OTP encryption method (an example of the first encryption method). When the accumulated amount of application keys is smaller than the size of the communication data, the KM 10 selects an AES encryption method (an example of the second encryption method) and calculates an application key update interval.

Thereafter, the QCF 17 instructs provision of the application key to the UPF 14a together with notification of the encryption method.

Then, the SMF 13 initiates session establishment processing or session modification processing. For example, the SMF 13 performs packet routing setting and forwarding setting on the UPF 14a (step S14).

Next, when the UPF 14a performs authentication and authorization with the KM 10 connected to the 5G core network (step S15), the application key can be provided from the KM 10 to the UPF 14a.

Next, a message related to N1 and N2 described above is transmitted from the SMF 13 to the AMF 12 (step S16). The message of step S16 includes a PDU session ID, SM information of N2, and a PDU session establishment request of N1.

Next, the AMF 12 transmits a PDU session establishment response to the UE 11 (step S17).

Next, the UE 11 completes PDU session establishment to the UPF 14a and the UPF PSA 14c in the 5G core network (steps S18-1 and S18-2).

Next, upon receiving communication data in the specific flow through PQC-based encrypted communication from the UE 11 to the UPF 14a, the UPF 14a requests the KM 10 for an application key for encrypting the specific flow, and receives an encryption key from the KM 10 (step S19).

The KM 10 compares the requested amount of application keys with the accumulated amount of application keys, and provides the application keys together with the notification of the encryption method when the accumulated amount of application keys is sufficient. The UPF 14a encrypts the communication data in the encryption method communicated from the KM 10 using the application keys provided from the KM 10 (step S20).

When the accumulated amount of application keys is smaller than the requested amount, the KM 10 shares the application keys with the KM 10 connected to the destination of the communication data. When the accumulated amount of application keys is insufficient, the KM 10 returns a response rejecting the request for application keys to the UPF 14a. When responding, the KM 10 also notifies related information regarding the provision of the requested application keys (e.g., the time at which the requested amount of application keys can be provided).

Through the above-described sequence, PQC-based secure communication is performed from the UE 11 to the UPF 14a in the 5G core network. Then, the communication data for the specific flow from the UPF 14a to the designated DN is encrypted by the application key utilizing QKD and transferred to the designated DN via the UPF PSA 14c.

Note that the sequence diagram of Fig. 7 is an example. The order of processing may be adjusted or optimized depending on the actual situation, need, and the like.

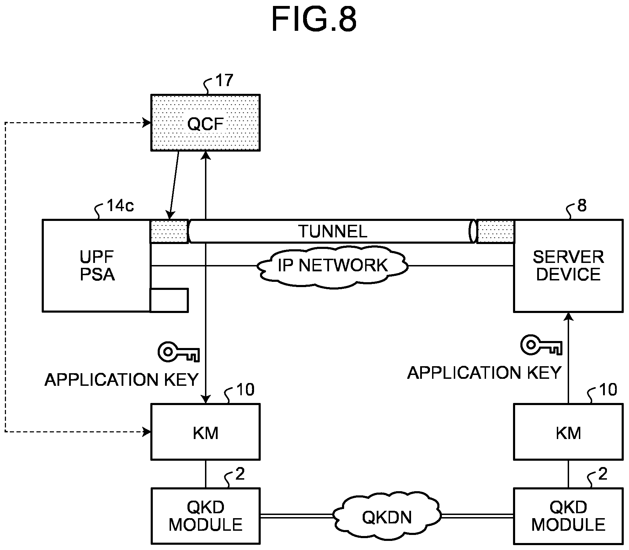

Fig. 8 is a diagram illustrating an example of a method of overall encryption of data packets in a specific flow according to the arrangement. The overall encryption method is a method in which data packet for a specific flow are selected, and an IP header and an IP payload in a network layer are encrypted as an integrated manner.

For example, there is an Internet protocol security (IPsec) technology as an overall encryption method. The IPsec is a group of protocols for protecting IP communication at a network layer. The IPsec is used to protect connection between devices, and is used to keep data transmitted over a public network secure. The IPsec is a mechanism for secure connection by encrypting an IP packet and making the contents unreadable to others. The IPsec supports a variety of encryption methods. For example, there are AES, Triple DES, and the like. In addition, the IPsec can be used for both asymmetric encryption (e.g., PQC technology) and symmetric encryption (e.g., QKD technology).

Furthermore, for example, as an overall encryption method, there is a tunnel (TUN)/terminal access point (TAP) technology of an open virtual private network (VPN). The TUN/TAP can perform network communication similarly to a device driver corresponding to a network card that is actual hardware, but data is sent to and processed by a software process that virtualizes network communication, rather than the hardware. The TAP can simulate an Ethernet device and operate on a data link layer (MAC layer). The TUN can simulate a network layer (IP layer) and manipulate IP packets and the like. As an application, for example, the TAP is used for a bridge, and the TUN is used for routing.

According to the above-described technology, a dedicated tunnel rises from the UPF PSA 14c to the server device 8 (cloud server), and encapsulation is realized in which all the packets are embedded in data (payload) of a protocol of another layer or the same layer for communication.

Note that the application key is shared by the QKDN, but a key ID of the application key (an identifier indicating which application key is used) and the like are shared between the UPF PSA 14c and the server device 8 in another tunnel. In addition, the tunnel may be from the UPF 14a to the server device 8.

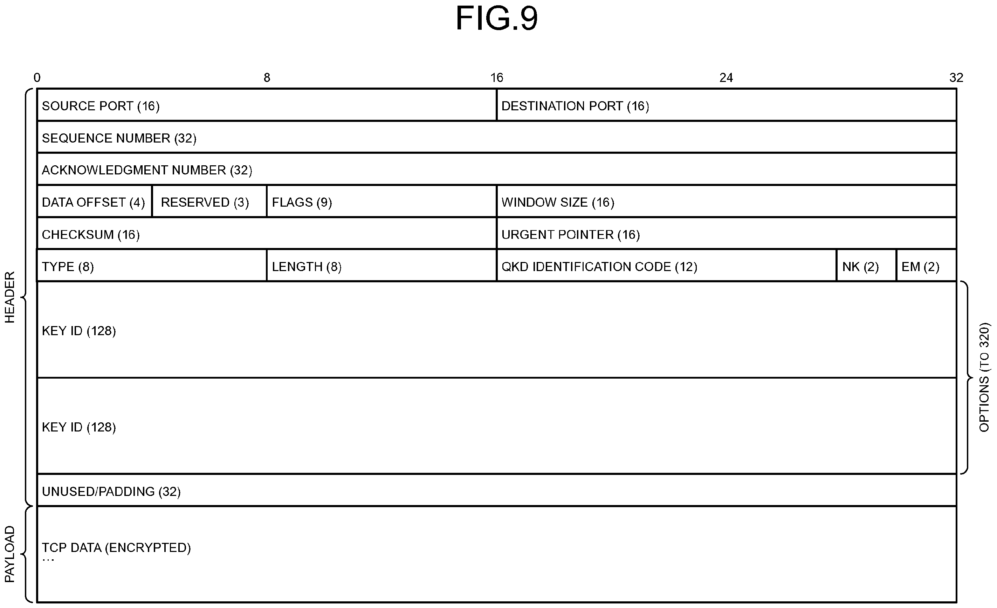

Fig. 9 is a diagram illustrating an example of a method of encrypting a payload portion of a specific flow. In Fig. 9, a TCP segment will be described as an example. Fig. 9 illustrates a method in which an ID of an application key is stored in an option field of the header of the TCP, and a payload portion is encrypted using the corresponding application key.

Fig. 9 illustrates a header and a payload of TCP. First, the structure of the header portion will be described.

Source port: a field indicating a port number of a transmission side, 16 bits.
Destination port: a field indicating a port number of a reception side, 16 bits.
Sequence number: a field indicating a sequence number, 32 bits.
Acknowledgment number: a field indicating an acknowledgment number, 32 bits.
Data offset: a field representing the size of the TCP header in units of 32-bit words, 4 bits. This field is used to determine whether an option is used.
Reserved: a field of reservation, 3 bits. This field is a bit string reserved for future use, and is always set to 0.
Flags: a field indicating a flag or a control bit string, 9 bits. There are nine 1-bit flags.
Window size: a field indicating a size of a reception window, 16 bits.
Checksum: a field indicating a 16-bit checksum for header and data error detection, 16 bits.
Urgent pointer: a field indicating an urgent pointer, 16 bits. If an urgent pointer flag is set, this indicates the offset from the sequence number of the latest urgent data byte.
Options: The header length field determines the length of this field. It is variable from 0 to 320 bits and changes in units of 32 bits.
Type: a field indicating an option type, 8 bits.
Length: a field indicating an option length, 8 bits.
QKD identification code: a field indicating an identifier for which the option field is used as a QKD key ID, 12 bits.
NK: a field indicating the number of QKD keys, 2 bits. For example, "01" indicates that one 128-bit key ID is stored. "10" indicates that two 128-bit key IDs are stored.
EM: a field indicating an encryption method, two bits. For example, "00" indicates encryption using an OTP method. "01" indicates encryption using an AES method.
Key ID: a field indicating an ID of a key, which is variable from 128 to 256 bits, and changes in units of 128 bits.
Unused/Padding: a field indicating unused or padding, 32 bits.

Excluding the length of the header of the TCP (fixed length of 160 bits + length indicated by data offset) from the length indicated in the "Length" field of the IP header, the other portion is the length of the payload of the TCP. The TCP payload portion is encrypted by an application key corresponding to the key ID stored in the header.

As described above, in the QCF 17 (an example of an information processing device) according to the arrangement, the processing unit 173 acquires an accumulated amount of application keys for each sharing destination from one or more key management devices 10 that share the application keys (second encryption keys) with another key management device 10 by an encryption relay using a link key (first encryption key) shared between opposing QKD module 2 included in the QKDN. The processing unit 173 notifies the SMF 13 (an example of a control device) that controls communication of a user network of a specific rule for specifying a flow to be encrypted by the application keys. The processing unit 173 acquires flow information from the SMF 13, the flow information including an amount of communication data between the UPF 14a (an example of a first communication device) and the server device 8 (an example of a second communication device) that communicate for the flow to be encrypted, and determines whether or not the accumulated amount of application keys to be used by the UPF PSA 14c and the server device 8 is equal to or larger than the amount of communication data. Then, when the accumulated amount of application keys is equal to or larger than the amount of communication data, the processing unit 173 instructs the key management device 10 connected to the UPF 14a to provide the application keys to the UPF 14a.

The QCF 17 according to the arrangement is capable of more safely and efficiently performing encrypted communication using a QKD network for a specific flow.

In this manner, the communication system according to the present arrangement is in cooperation with the 5G core network and the QKDN, and can implement the encryption function with application keys from the QKDN only for the specific flow between the 5G core network and the cloud. As a result, the 5G core network can reduce requesting the QKDN to generate application keys. Further, an encryption method related to security can be selected depending on the amount of data and the communication request. In addition, when another encryption method is also managed by the QCF 17, the management can be performed efficiently and diversely.

### First Modification of Arrangement

Next, a modification of the above-described arrangement will be described. In the description of the first modification, the description similar to that in the arrangement will be omitted, and differences from the arrangement will be described.

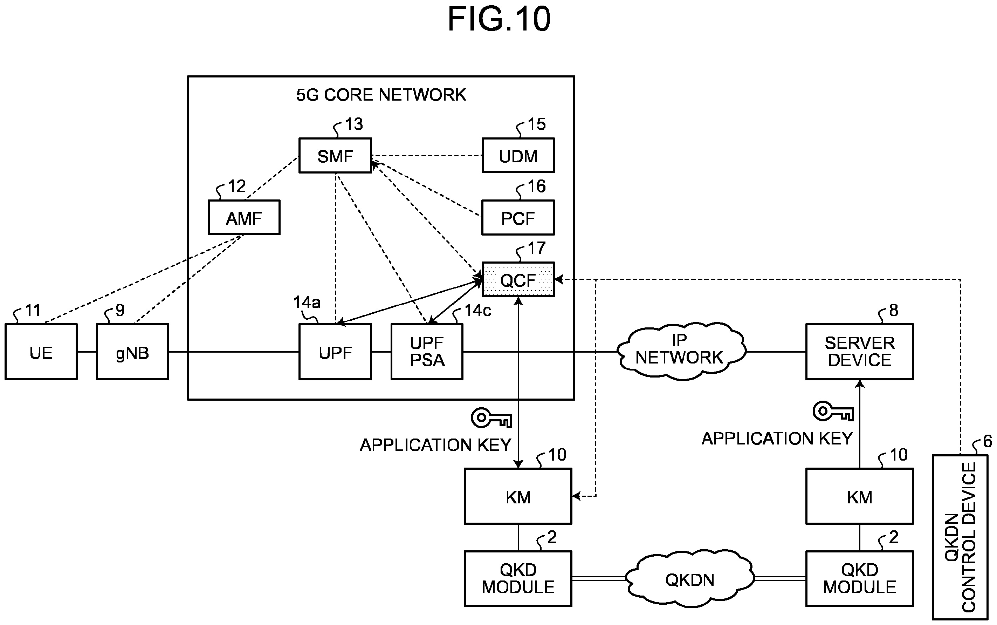

Fig. 10 is a diagram for explaining a specific flow encryption function according to the first modification of the arrangement. A difference between the first modification of Fig. 10 and the example of Fig. 5 is that the destination of the application key provided from the QKDN to the 5G core network is not the UPF 14a but the QCF 17. An advantage of the first modification is that the application key can be provided to a fixed destination (the IP address of the QCF 17) regardless of the selection of the UPF 14a and the establishment of the UPF PSA 14c. In addition, in the first modification, authentication and authorization between the QCF 17 and the KM 10 need to be performed only once.

Note that not only the UPF 14a but also the UPF PSA 14c can encrypt a data packet for a specific flow. The QCF 17 transfers an application key to the UPF 14a or the UPF PSA 14c in order to perform encryption. For example, the application key is transferred to the UPF 14a or the UPF PSA 14c via the SMF 13 using an existing reference point. Furthermore, for example, the application key may be directly transferred from the QCF 17 to the UPF 14a or the UPF PSA 14c by defining a new reference point.

For example, an application key may be provided to the QCF 17 every time the application key is requested. In addition, for example, an area (buffer) for accumulating application keys may be prepared in the QCF 17, and application keys may be accumulated in advance even if there is no request for application key. As a result, it is possible to shorten the time for providing an application key from the KM 10 to the UPF 14a or the UPF PSA 14c via the QCF 17.

### Second Modification of Arrangement

Next, a modification of the above-described arrangement will be described. In the description of the second modification, the description similar to that in the arrangement will be omitted, and differences from the arrangement will be described.

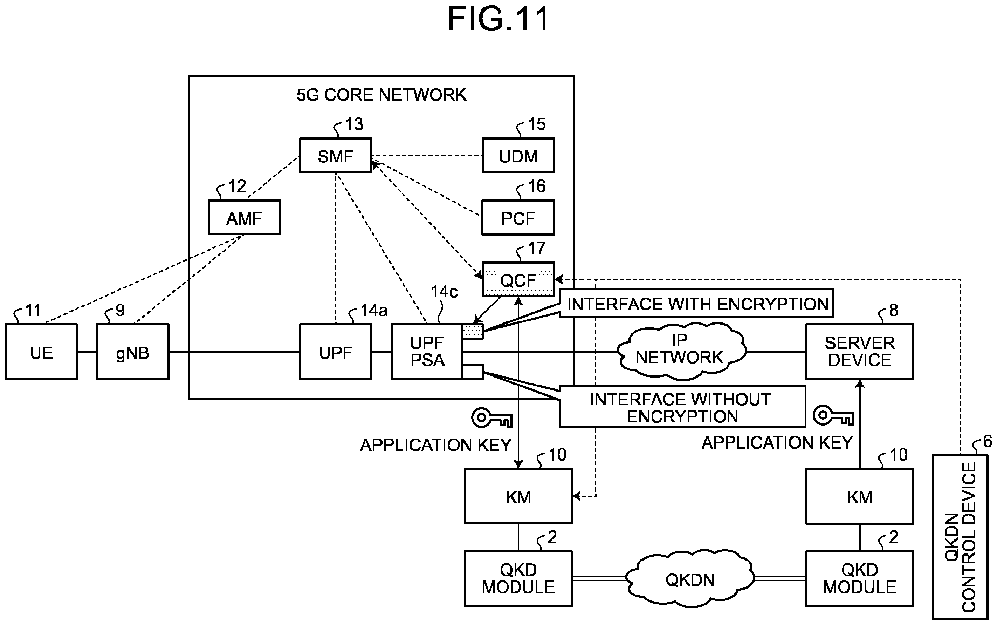

Fig. 11 is a diagram for explaining a specific flow encryption function according to the second modification of the arrangement. A difference between the second modification of Fig. 11 and the example of Fig. 7 is that the QCF 17 does not provide an application key to the UPF 14a or the UPF PSA 14c, but provides an application key to an interface of the UPF PSA 14c (N6 described above). For example, there is a mechanism called an N6 local area network (LAN). The N6 LAN is a part that carries data from the UPF 14 to the DN (see Fig. 4). The N6 LAN plays the same role as the SGi-LAN of the 4G network. For example, the N6 LAN includes a local domain name system (LDNS), carrier grade network address translation (CGNAT), a firewall, TCP optimization, a security service, and the like. In order to provide a security service, for example, an interface with encryption and an interface without encryption are installed in each interface, and the QCF 17 provides an application key only to the interface with encryption to perform encryption.

Note that the encryption keys of the above-described arrangement (Fig. 5) and the first and second modifications (Figs. 10 and 11) may be used as not only application keys provided from the QKDN via the QCF 17 but also hybrid keys combined with other encryption keys (e.g., PQC-based encryption keys).

Finally, an example of a hardware configuration of each of the QKD module 2, the key management device (KM) 10, and the QCF 17 according to the arrangement will be described.

### Example of Hardware Configuration

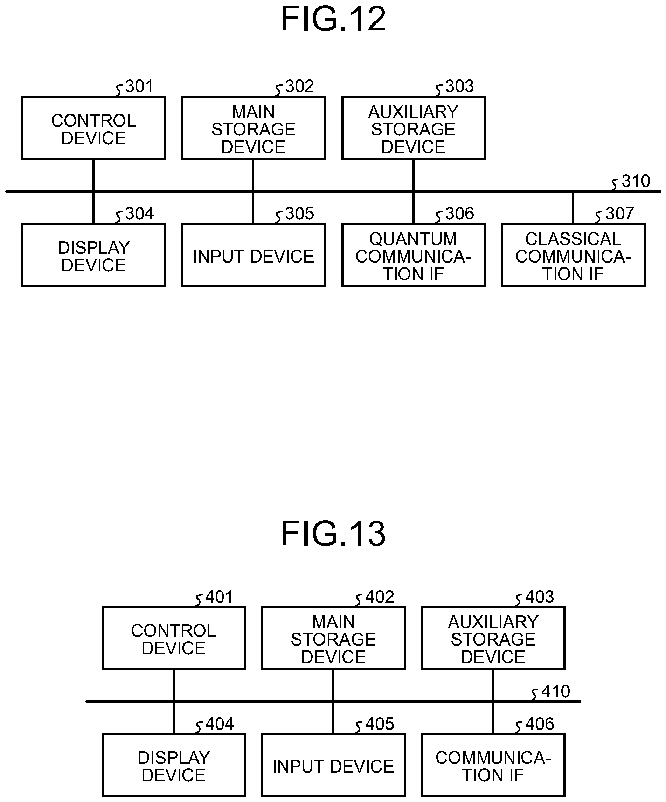

Fig. 12 is a diagram illustrating an example of a hardware configuration of the QKD module 2 according to the arrangement. The QKD module 2 according to the arrangement includes a control device 301, a main storage device 302, an auxiliary storage device 303, a display device 304, an input device 305, a quantum communication IF 306, and a classical communication IF 307.

The control device 301, the main storage device 302, the auxiliary storage device 303, the display device 304, the input device 305, the quantum communication IF 306, and the classical communication IF 307 are connected to each other via a bus 310.

The control device 301 executes a program read from the auxiliary storage device 303 to the main storage device 302. The main storage device 302 is a memory such as a ROM or a RAM. The auxiliary storage device 303 is an HDD, a memory card, or the like.

The display device 304 displays the state of the QKD module 2, etc. The input device 305 receives an input from the user. Note that the display device 304 and the input device 305 may be realized by a touch panel or the like having a display function and an input function. In addition, the display device 304 and the input device 305 may not be included in the QKD module 2. In this case, for example, a display function and an input function of an external terminal connected to the QKD module 2 are used.

The quantum communication IF 306 is an interface for connection to a QKD link over which photons are transmitted. The classical communication IF 307 is an interface for connection to a transmission path through which a control signal is transmitted to an opposing QKD module 2, a transmission path communicating with the key management device 10, and the like.

Fig. 13 is a diagram illustrating an example of a hardware configuration of each of the key management device 10 and the QCF 17 according to the arrangement. The key management device 10 and the QCF 17 include a control device 401, a main storage device 402, an auxiliary storage device 403, a display device 404, an input device 405, and a communication IF 406.

Note that the hardware configurations of the QKDN control device 6, the server device 8, the UE 11, the AMF 12, the SMF 13, the UPF 14, the UDM 15, and the PCF 16 are also similar to the hardware configuration in Fig. 13.

The control device 401, the main storage device 402, the auxiliary storage device 403, the display device 404, the input device 405, and the communication IF 406 are connected to each other via a bus 410.

The control device 401 executes a program read from the auxiliary storage device 403 to the main storage device 402. The main storage device 402 is a memory such as a ROM or a RAM. The auxiliary storage device 403 is an HDD, a memory card, or the like.

The display device 404 displays the state of each of the key management device 10 and the QCF 17, etc. The input device 405 receives an input from the user. Note that the display device 404 and the input device 405 may be realized by a touch panel or the like having a display function and an input function. In addition, the display device 404 and the input device 405 may not be included in each of the key management device 10 and the QCF 17. In this case, for example, a display function and an input function of an external terminal connected to each of the key management device 10 and the QCF 17 are used.

The communication IF 406 is an interface for connection to a transmission path.

The program executed by the QKD module 2, the key management device 10, and the QCF 17 according to the arrangement is a file in an installable format or an executable format, and is stored in a computer-readable storage medium such as a CD-ROM, a memory card, a CD-R, and a digital versatile disc (DVD), and provided as a computer program product.

The program executed by the QKD module 2, the key management device 10, and the QCF 17 may be stored in a computer connected to a network such as the Internet, and provided by being downloaded via the network.

In addition, the program executed by the QKD module 2, the key management device 10, and the QCF 17 may be provided via a network such as the Internet without being downloaded.

In addition, the program executed by the QKD module 2, the key management device 10, and the QCF 17 may be provided by being incorporated in the ROM or the like in advance.

Some or all of the functions of the QKD module 2, the key management device 10, and the QCF 17 may be implemented by hardware such as an integrated circuit (IC). The IC is, for example, a processor that executes dedicated processing.

In addition, in a case where each function is realized by using a plurality of processors, each processor may realize one of the functions or may realize two or more of the functions.

While certain arrangements have been described, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made without departing from the scope of the invention as defined by the appended claims. The accompanying claims are intended to cover such forms or modifications as would fall within the scope of the inventions.

### Supplemental Note

Note that the above-described arrangements can be summarized as the following technical ideas.

### Technical idea 1

An information processing device includes
a processing unit configured to:
acquire, from one or more key management devices that share, by an encryption relay using a first encryption key, second encryption keys with another key management device, an accumulated amount of the second encryption keys for each sharing destination, the first encryption key being shared between opposing QKD modules included in a quantum key distribution network (QKDN);
notify a control device of a specific rule for specifying a flow to be encrypted by the second encryption keys, the control device controlling communication of a user network;
acquire flow information from the control device, the flow information including an amount of communication data between first and second communication devices that communicate for the flow to be encrypted;
determine whether the accumulated amount of the second encryption keys to be used by the first and second communication devices is equal to or larger than the amount of communication data; and
instruct, among the one or more key management devices, a key management device connected to the first communication device to provide the second encryption keys to the first communication device when the accumulated amount of the second encryption keys is equal to or larger than the amount of communication data.

### Technical idea 2

In the information processing device according to Technical idea 1,
the user network includes a 5G core network and an IP network,
the control device includes a device that controls communication of the 5G core network,
the first communication device includes a device that controls communication of a user of the 5G core network, and
the second communication device includes a server device connected to the IP network.

### Technical idea 3

In the information processing device according to Technical idea 2,
the control device includes a session management function (SMF), and
the first communication device includes a user plane function (UPF).

### Technical idea 4

The information processing device according to any one of Technical ideas 1 to 3, further includes:
a storage device configured to store the accumulated amount of the second encryption keys for each sharing destination and a total amount of communication data encrypted and communicated by the second encryption keys.

### Technical idea 5

In the information processing device according to any one of Technical ideas 1 to 4,
the processing unit notifies a charging management device of the user network of a total amount of communication data encrypted and communicated by the second encryption keys.

### Technical idea 6

In the information processing device according to any one of Technical ideas 1 to 5,
the processing unit acquires the specific rule from a user terminal or an administrator terminal of the user network.

### Technical idea 7

In the information processing device according to any one of Technical ideas 1 to 6,
the processing unit determines a routing path between the first communication device and the key management device, and notifies the key management device connected to the first communication device of the routing path.

### Technical idea 8

In the information processing device according to any one of Technical ideas 1 to 7,
the processing unit determines an encryption method using the second encryption keys as a first encryption method when the accumulated amount of the second encryption keys is equal to or larger than the amount of communication data, determines the encryption method using the second encryption keys as a second encryption method when the accumulated amount of the second encryption keys is smaller than the amount of communication data, and notifies the key management device connected to the first communication device of the determined encryption method.

### Technical idea 9

In the information processing device according to Technical idea 8,
the first encryption method includes an encryption method in which an amount of the second encryption keys used for encryption is larger than that in the second encryption method, and
the second encryption method includes an encryption method in which an amount of the second encryption keys used for encryption is smaller than that in the first encryption method.

### Technical idea 10

In the information processing device according to Technical idea 9,
the first encryption method includes a one time pad (OTP) encryption method, and
the second encryption method includes an advanced encryption standard (AES) encryption method.

### Technical idea 11

A quantum cryptographic communication system includes:
the information processing device according to any one of Technical ideas 1 to 10;
the control device configured to control communication of the flow to be encrypted between the first and second communication devices;
the first communication device; and
the key management device connected to the first communication device.

### Technical idea 12

An information processing method includes:
acquiring, by an information processing device, from one or more key management devices that share, by an encryption relay using a first encryption key, second encryption keys with another key management device, an accumulated amount of the second encryption keys for each sharing destination, the first encryption key being shared between opposing QKD modules included in a quantum key distribution network (QKDN);
notifying, by the information processing device, a control device of a specific rule for specifying a flow to be encrypted by the second encryption keys, the control device controlling communication of a user network;
acquiring, by the information processing device, flow information from the control device, the flow information including an amount of communication data between first and second communication devices that communicate for the flow to be encrypted;
determining, by the information processing device, whether the accumulated amount of the second encryption keys to be used by the first and second communication devices is equal to or larger than the amount of communication data; and
instructing, by the information processing device, among the one or more key management devices, a key management device connected to the first communication device to provide the second encryption keys to the first communication device when the accumulated amount of the second encryption keys is equal to or larger than the amount of communication data.

### Technical idea 13

A computer-readable medium including instructions which, when executed by an information processing device, cause the information processing device to perform:
acquiring, from one or more key management devices that share, by an encryption relay using a first encryption key, second encryption keys with another key management device, an accumulated amount of the second encryption keys for each sharing destination, the first encryption key being shared between opposing QKD modules included in a quantum key distribution network (QKDN);
notifying a control device of a specific rule for specifying a flow to be encrypted by the second encryption keys, the control device controlling communication of a user network;
acquiring flow information from the control device, the flow information including an amount of communication data between first and second communication devices that communicate for the flow to be encrypted;
determining whether the accumulated amount of the second encryption keys to be used by the first and second communication devices is equal to or larger than the amount of communication data; and
instructing, among the one or more key management devices, a key management device connected to the first communication device to provide the second encryption keys to the first communication device when the accumulated amount of the second encryption keys is equal to or larger than the amount of communication data.

## Claims

1. An information processing device (17) comprising
a processing unit (173) configured to:
acquire, from one or more key management devices (10) that share, by an encryption relay using a first encryption key, second encryption keys with another key management device (10), an accumulated amount of the second encryption keys for each sharing destination, the first encryption key being shared between opposing QKD modules (2) included in a quantum key distribution network (QKDN);
notify a control device (6) of a specific rule for specifying a flow to be encrypted by the second encryption keys, the control device (6) controlling communication of a user network;
acquire flow information from the control device (6), the flow information including an amount of communication data between first and second communication devices (14a, 8) that communicate for the flow to be encrypted;
determine whether the accumulated amount of the second encryption keys to be used by the first and second communication devices (14a, 8) is equal to or larger than the amount of communication data; and
instruct, among the one or more key management devices (10), a key management device (10) connected to the first communication device (14a) to provide the second encryption keys to the first communication device (14a) when the accumulated amount of the second encryption keys is equal to or larger than the amount of communication data.

2. The information processing device (17) according to claim 1, wherein
the user network includes a 5G core network and an IP network,
the control device (6) includes a device that controls communication of the 5G core network,
the first communication device (14a) includes a device that controls communication of a user of the 5G core network, and
the second communication device (8) includes a server device connected to the IP network.

3. The information processing device (17) according to claim 2, wherein
the control device (6) includes a session management function (SMF), and
the first communication device (14a) includes a user plane function (UPF).

4. The information processing device (17) according to any one of claims 1 to 3, further comprising:
a storage device (172) configured to store the accumulated amount of the second encryption keys for each sharing destination and a total amount of communication data encrypted and communicated by the second encryption keys.

5. The information processing device (17) according to any one of claims 1 to 3, wherein
the processing unit (173) notifies a charging management device of the user network of a total amount of communication data encrypted and communicated by the second encryption keys.

6. The information processing device (17) according to any one of claims 1 to 3, wherein
the processing unit (173) acquires the specific rule from a user terminal or an administrator terminal of the user network.

7. The information processing device (17) according to any one of claims 1 to 3, wherein
the processing unit (173) determines a routing path between the first communication device (14a) and the key management device (10), and notifies the key management device (10) connected to the first communication device (14a) of the routing path.

8. The information processing device (17) according to any one of claims 1 to 3, wherein
the processing unit (173) determines an encryption method using the second encryption keys as a first encryption method when the accumulated amount of the second encryption keys is equal to or larger than the amount of communication data, determines the encryption method using the second encryption keys as a second encryption method when the accumulated amount of the second encryption keys is smaller than the amount of communication data, and notifies the key management device (10) connected to the first communication device (14a) of the determined encryption method.

9. The information processing device (17) according to claim 8, wherein
the first encryption method includes an encryption method in which an amount of the second encryption keys used for encryption is larger than that in the second encryption method, and
the second encryption method includes an encryption method in which an amount of the second encryption keys used for encryption is smaller than that in the first encryption method.

10. The information processing device (17) according to claim 9, wherein
the first encryption method includes a one time pad (OTP) encryption method, and
the second encryption method includes an advanced encryption standard (AES) encryption method.

11. A quantum cryptographic communication system comprising:
the information processing device (17) according to any one of claims 1 to 3;
the control device (6) configured to control communication of the flow to be encrypted between the first and second communication devices (14a, 8);
the first communication device (14a); and
the key management device (10) connected to the first communication device (14a).

12. An information processing method comprising:
acquiring, by an information processing device (17), from one or more key management devices (10) that share, by an encryption relay using a first encryption key, second encryption keys with another key management device (10), an accumulated amount of the second encryption keys for each sharing destination, the first encryption key being shared between opposing QKD modules (2) included in a quantum key distribution network (QKDN);
notifying, by the information processing device (17), a control device (6) of a specific rule for specifying a flow to be encrypted by the second encryption keys, the control device (6) controlling communication of a user network;
acquiring, by the information processing device (17), flow information from the control device (6), the flow information including an amount of communication data between first and second communication devices (14a, 8) that communicate for the flow to be encrypted;
determining, by the information processing device (17), whether the accumulated amount of the second encryption keys to be used by the first and second communication devices (14a, 8) is equal to or larger than the amount of communication data; and
instructing, by the information processing device (17), among the one or more key management devices (10), a key management device (10) connected to the first communication device (14a) to provide the second encryption keys to the first communication device (14a) when the accumulated amount of the second encryption keys is equal to or larger than the amount of communication data.

13. A computer-readable medium comprising instructions which, when executed by an information processing device (17), cause the information processing device (17) to perform:
acquiring, from one or more key management devices (10) that share, by an encryption relay using a first encryption key, second encryption keys with another key management device (10), an accumulated amount of the second encryption keys for each sharing destination, the first encryption key being shared between opposing QKD modules (2) included in a quantum key distribution network (QKDN);
notifying a control device (6) of a specific rule for specifying a flow to be encrypted by the second encryption keys, the control device (6) controlling communication of a user network;
acquiring flow information from the control device (6), the flow information including an amount of communication data between first and second communication devices (14a, 8) that communicate for the flow to be encrypted;
determining whether the accumulated amount of the second encryption keys to be used by the first and second communication devices (14a, 8) is equal to or larger than the amount of communication data; and
instructing, among the one or more key management devices (10), a key management device (10) connected to the first communication device (14a) to provide the second encryption keys to the first communication device (14a) when the accumulated amount of the second encryption keys is equal to or larger than the amount of communication data.
